(19) **Europäisches Patentamt European Patent Office Office européen des brevets**

(11) **EP 4 386 435 B1**

(12) **EUROPEAN PATENT SPECIFICATION**

(45) Date of publication and mention of the grant of the patent:
**04.02.2026 Bulletin 2026/06**

(21) Application number: **23216233.9**

(22) Date of filing: **13.12.2023**

(51) International Patent Classification (IPC):
***G01S 7/481*** *(2006.01)*

(52) Cooperative Patent Classification (CPC):
**G01S 7/4817**

(54) **LASER RADAR DEVICE FOR IMPROVING ACCURACY OF CALCULATION**

LASERRADARVORRICHTUNG ZUR VERBESSERUNG DER BERECHNUNGSGENAUIGKEIT

DISPOSITIF RADAR LASER POUR AMÉLIORER LA PRÉCISION DE CALCUL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2022 TW 111148278**

(43) Date of publication of application:
**19.06.2024 Bulletin 2024/25**

(73) Proprietor: **Hon Hai Precision Industry Co., Ltd. New Taipei City (TW)**

(72) Inventors:
• **TSENG, KUO-FONG**
  **New Taipei (TW)**
• **LIAO, YU-TING**
  **New Taipei (TW)**

(74) Representative: **Metida**
  **Gyneju str. 16**
  **01109 Vilnius (LT)**

(56) References cited:
**CN-A- 107 703 517      US-A1- 2020 303 888**
**US-A1- 2021 072 532**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The subject matter herein generally relates to laser radar.

BACKGROUND

A laser radar system emits laser beam for detecting features related to a target object, such as a position of the target object and the speed of the target object. The laser beam reflected by the target object is received and compared with the emitted laser beam. By further processing, the features related to the target object are obtained, such as a distance, a position, a height, a speed, a posture, and a shape, and the like. Thus, the target object, such as a plane or a guided missile, can be detected, tracked, and identified. For measuring a distance, a scanning angle formed by turning the laser beam is limited, and a deflection efficiency of the laser beam is low, which cause a measure result to be poor. CN107703517 discloses an on-vehicle multiple-beam optical phased array laser three-dimensional imaging radar system, which relates to the technical field of radar engineering, which settles problems of short-distance object detection and low imaging frame frequency in an existing laser three-dimensional imaging system. The on-vehicle multiple-beam optical phased array laser three-dimensional imaging radar system comprises a multi-beam laser module, a transmitting module, a receiving module, a central processor and a distance measuring unit. The multi-beam laser module comprises a beam splitter, a phase modulator array, a fiber amplifier array and a collimating beam spreading array. The transmitting module comprises a unidirectional glass array and an optical phased array. The receiving module comprises an optical filter array, a double-bonding-lens array, a surface array APD array, a quenching circuit and a distance measuring unit. A ground objective area is scanned through multiple laser beams, thereby obtaining corresponding point cloud data. The obtained data are processed, thereby realizing objective three-dimensional image reconstruction with advantages of high frame frequency, high resolution and large visual field. A detecting task to a ground object is finished in real time in high speed. The on-vehicle multiple-beam optical phased array laser three-dimensional imaging radar system has advantages of high measurement speed and high measurement precision. US2021072532A1 discloses a capacitive micro-electromechanical system (MEMS) structure or device and methods of making and operating the same. Generally, the MEMS device provides a large stroke while maintaining good damping, enabling fast beam steering and large scan angles. In one embodiment, the capacitive MEMS device includes a bottom electrode formed over a substrate; an electrically permeable damping structure formed over the bottom electrode, the electrically permeable damping structure including a first air-gap and a dielectric layer suspended above and separated from the bottom electrode by the first air-gap, each of the plurality of movable members including a top electrode and being configured to deflect towards the bottom electrode by electrostatic force. Other embodiments are also described. US2020303888A1 discloses a laser beam steering device and a system including the laser beam steering device. The laser beam steering device includes a refractive index change layer having a refractive index that changes based on an electrical signal; at least one antenna pattern disposed above the refractive index change layer; a wavelength selection layer disposed under the refractive index change layer and configured to correspond to a wavelength of a laser beam incident onto the laser beam steering device and a driver configured to apply the electrical signal to the refractive index change layer.

There is room for improvement in the art.

SUMMARY

An embodiment of the present application provides a laser radar device, so as to solve the above problems.

An embodiment of the present application provides a laser radar device. The laser radar device includes a light source module, a collimating module, an optical phase-controlled array, a processing module, and a receiving module. The collimating module collimates the laser beam emitted by the light source module. The optical phase-controlled array deflects the collimated laser beam and reflects the deflected laser beam for making the reflected laser beam to illuminate at a target object. The receiving module receives the laser beam reflected by the target object and converts the received laser beam into electric signals. The processing module calculate a distance between the laser radar device and the target object based on the received electric signals.

Furthermore, the optical phase-controlled array comprises a conducting layer and an electrode layer; the conducting layer receives the collimated laser beam and reflects the laser beam; when the conducting layer and the electrode layer being powered, an electric field is formed between the conducting layer and the electrode layer.

Furthermore, the optical phase-controlled array further comprises a dielectric layer; the dielectric layer is located between the conducting layer and the electrode layer; the dielectric layer generates carrier based on the electric field formed between the conducting layer and the electrode layer and adjusts a carrier concentration according to a voltage of the electrical field.

Furthermore, the electrode layer comprises a plurality of electrodes located on a surface of the electrode layer facing to the dielectric layer; a surface of the dielectric layer facing to the electrode layer defines receiving slots corresponding to the electrodes.

Furthermore, when the carrier concentration changes, a reflective index of the conducting layer is changed.

Furthermore, the receiving module comprises a receiving component and a conversion component; the receiving component receives the laser beam reflected by the target object and transmits the laser beam to the conversion component; the conversion component coverts the received laser beam from the receiving component into electrical signals and transmits the electrical signals to the processing module.

Furthermore, the optical phase-controlled array further comprises a base; the conducting layer, the dielectric layer, the electrode layer, and the base are arranged in that order.

Furthermore, a size of at least one of the electrodes is different from the size of the other electrodes.

Furthermore, the sizes of the electrodes are different from each other and the electrodes are arranged according to the sizes of the electrodes.

Furthermore, the sizes of the electrodes are increased by an equal difference according to the arrangement of the electrodes.

The laser radar device of the present disclosure deflects the laser beam by the optical phase-controlled array to be illuminated on the target object. The electrode layer of the optical phase-controlled array includes a plurality of electrodes for changing a distribution of the electrical field when the optical phase-controlled array being powered, thus the carrier concentration of the dielectric layer is changed, and the reflective index of the conducting layer is also changed. When the laser beam enters the conducting layer, the phase of the laser beam is changed, and the illuminating direction is deflected. Due to a smaller size of the electrode, the deflection efficiency of the laser beam is increased. Therefore, by setting the sizes of the electrodes on the electrode layer, the illuminating direction of the laser beam is deflected to be faced to the target object accurately, and an accuracy of calculating the distance between the laser radar device and the target object is also improved.

BRIEF DESCRIPTION OF THE DRAWINGS

Implementations of the present disclosure will now be described, by way of example only, with reference to the attached figures.

FIG. 1 is diagram illustrating an embodiment of a laser radar device according to the present disclosure, the laser radar device comprises an optical phase-controlled array.

FIG. 2 is a diagram illustrating an embodiment of optical phase-controlled array of FIG. 2 according to the present disclosure.

FIG. 3 is an exploded diagram illustrating an embodiment of optical phase-controlled array of FIG. 2 according to the present disclosure, the optical phase-controlled array includes an electrode layer.

FIG. 4 is a diagram illustrating a first embodiment of the electrode layer of FIG. 3 according to the present disclosure.

FIG. 5 is a diagram illustrating a second embodiment of the electrode layer of FIG. 3 according to the present disclosure.

FIG. 6 is a diagram illustrating an embodiment of a relationship between sizes of the electrode in FIG. 4 and deflection efficiencies according to the present disclosure.

FIG. 7 is a diagram illustrating an embodiment of the laser beam entered into the optical phase-controlled array of FIG. 2 and the laser beam being outputted from the optical phase-controlled array of FIG. 2 according to the present disclosure.

DETAILED DESCRIPTION

The present disclosure is described with reference to accompanying drawings and the embodiments.

It will be understood that, even though the flowchart shows a specific order, an order different from the specific order shown in the flowchart can be implemented. The method of the present disclosure can include one or more steps or actions for achieving the method.

In general, the word "module," as used herein, refers to logic embodied in hardware or firmware, or to a collection of software instructions, written in a programming language, for example, Java, C, or assembly. One or more software instructions in the modules may be embedded in firmware, such as an EPROM, magnetic, or optical drives. It will be appreciated that modules may comprise connected logic units, such as gates and flip-flops, and may comprise programmable units, such as programmable gate arrays or processors, such as a CPU. The modules described herein may be implemented as either software and/or hardware modules and may be stored in any type of computer-readable medium or other computer storage systems. The term "comprising" means "including, but not necessarily limited to"; it specifically indicates open-ended inclusion or membership in a so-described combination, group, series, and the like. The disclosure is illustrated by way of example and not by way of limitation in the figures of the accompanying drawings in which like references indicate similar elements. It should be noted that references to "an" or "one" embodiment in this disclosure are not necessarily to the same embodiment, and such references can mean "at least one."

Terms "first", "second", and the like used in the specification, the claims, and the accompanying drawings of the present disclosure are used to distinguish different objects rather than describe a particular order. A term "comprise" and its variations are intended to cover a non-exclusive inclusion. For example, a process, method, system, product, or apparatus including a series of steps or units is not limited to the listed steps or units, and may optionally include other steps or units that are not listed, or other steps or units inherent to the process, method, product, or device.

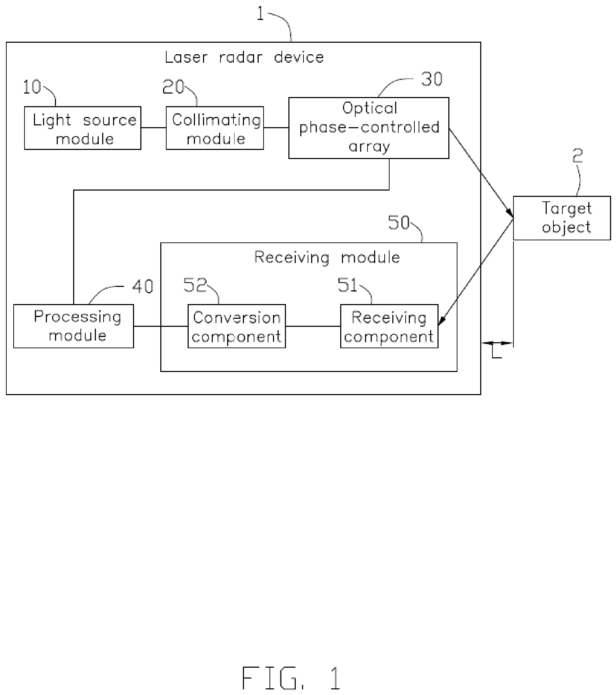

FIG. 1 shows a laser radar device 1 of the present disclosure. The laser radar device 1 accurately measures a distance between the laser device 1 and a target object 2. The laser radar device 1 includes a light source module 10, a collimating module 20, an optical phase-controlled array 30, a processing module 40, and a receiving module 50.

The light source 10 emits laser beam. In some embodiments, the light source module 10 includes multiple light sources for emitting different laser beams.

The collimating module 20 is located on a propagation direction of the laser beam emitted by the light source module 10. The collimating module 20 collimates the laser beam for integrating the laser beams into a collimated laser beam and emits the collimated laser beam. In some embodiment, the collimating module 10 is collimating lens.

The optical phase-controlled array 30 is located on the propagation direction of the laser beam after the collimating module 20. The optical phase-controlled array 30 deflects the collimated laser beam when being powered, and reflect the deflected laser beam for illuminating the reflected laser beam at a scanning angle. In detail, in some embodiments, the optical phase-controlled array 30 processes the received laser beam emitted by the collimating module 20 for turning the deflected laser beam to the target object 2. In some embodiments, the optical phase-controlled array 30 is an optical parameter amplification (OPA) chip.

The processing module 40 is electrically connected with the optical phase-controlled array 30. The processing module 40 controls a value of a voltage provided to the optical phase-controlled array 30 for controlling a deflection angle of the laser beam.

The receiving module 50 is electrically connected with the processing module 40. The receiving module 50 receives the laser beam reflected by the target object 2, and converts the reflected laser beam into electronic signals to transmit to the processing module 40. The processing module 40 receives the transmitted electronic signals and calculates a distance between the laser radar device 1 and the target object 2.

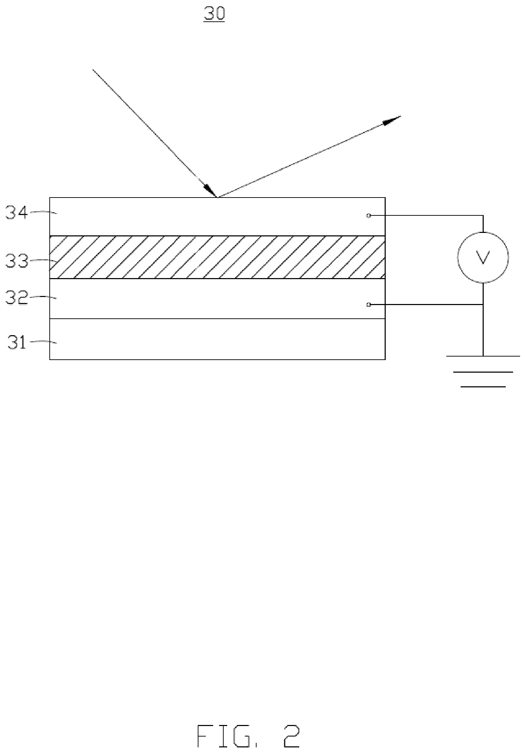

FIG. 2 shows the optical phase-controlled array 30. In detail, the optical phase-controlled array 30 includes a conducting layer 34, a dielectric layer 33, an electrode layer 32, and a base 31, which are arranged in that order.

The conducting layer 34 is a transparent layer.

The conducting layer 34 receives the collimated laser beam and reflects the received laser beam. In some embodiments, the conducting layer 34 is a transparent layer with Indium Tin Oxide (ITO), Indium Zinc Oxide (IZO), Aluminum-dopped Zinc Oxide (AZO), Gallium Zinc Oxide (GZO), Aluminum Gallium Zinc Oxide (AGZO), or Gallium Indium Zinc Oxide (GIZO).

A power supply V is electrically connected between the conducting layer 34 and the electrode layer 32. The power supply V provides voltages to the conducting layer 34 and the electrode layer 32. When the conducting layer 34 and the electrode layer 32 being powered, an electric field is formed between the conducting layer 34 and the electrode layer 32. In some embodiments, the electrode layer 32 is made of metal material. The electrode layer 32 is formed by a combination of Au with any one metal from the group consisting of Cu, AL, Ni, Fe, Co, Zn, Ti, Ru, Rh, Pd, Pt, Ag, Os, Ir.

The dielectric layer 33 is polarized by the electric field formed by the conducting layer 34 and the electrode layer 32 to generate carriers. A carrier concentration is adjusted based on the value of the voltage of the electric field. When the carrier concentration changes, a reflective index of the dielectric layer 33 is changed, and a phase delay is generated while the laser beam enters the conducting layer 34 for changing a phase of the laser beam. Thus, an illuminating direction is deflected. In some embodiments, the dielectric layer 33 is made of insulating silicon compound or an insulating metal compound. The insulating silicon compound includes, for example, silicon oxide ($SiO_x$), silicon nitride ($Si_xN_y$), or silicon oxynitride (SiON). The insulating metal compound includes, for example, aluminum oxide ($Al_2O_3$), hafnium oxide (HfO), zirconium oxide (ZrO), or hafnium silicon oxide (HfSiO).

The base 31 is served as an insulating layer for insulating the electrode layer 32. In some embodiments, the base 31 is an insulating layer made of silicon dioxide.

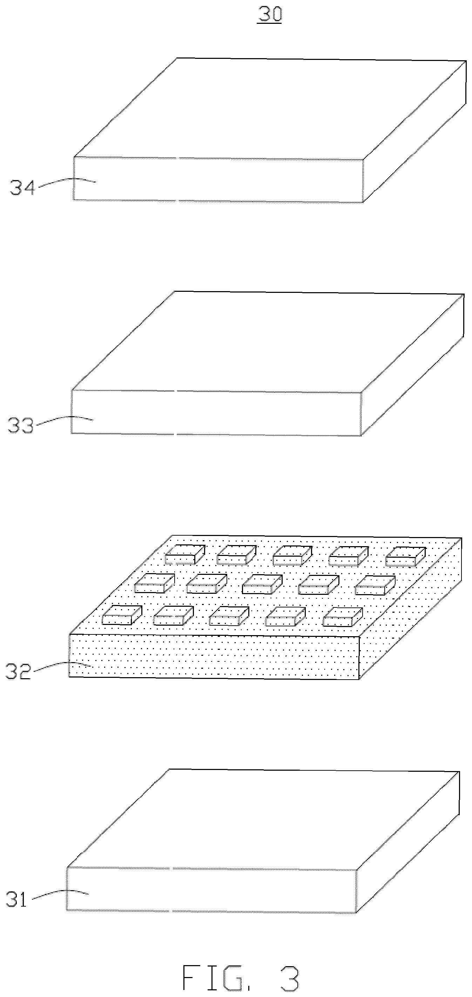

FIG. 3 shows the electrode layer 32. The electrode layer 32 includes a plurality of electrodes 321 located on a surface of the electrode layer 32 facing to the dielectric layer 33, which are arranged in a regular array. A surface of the dielectric layer 33 facing to the electrode layer 32 defines receiving slots corresponding to the electrodes 321, thus the dielectric layer 33 is fitted with the electrode layer 32. The electrodes 321 of the electrode layer 32 are used for changing a distribution of the electric field. Therefore, the carrier concentration generated by the dielectric layer 33 is changed, and the reflective index of the conducting layer 34 is also changed for adjusting the deflection angle of the laser beam. In some embodiments, the electrodes 321 of the electrode layer 32 is a projection with a common size.

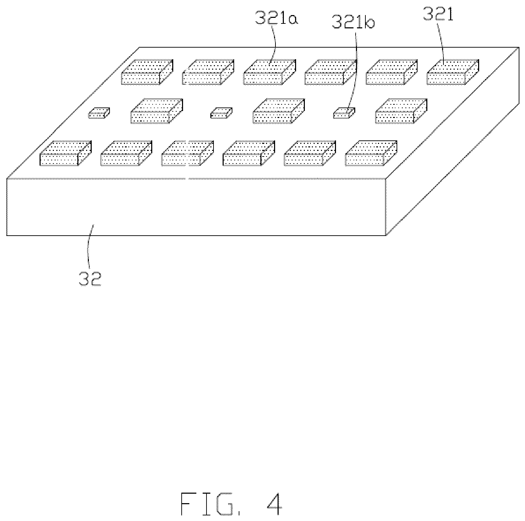

FIG. 4 shows a first embodiment of the electrode layer 32. In some embodiments, the electrode layer 32 includes a plurality of electrodes 321 in different sizes. For example, the size of the electrode 321a is different from the size of the electrode 321b.

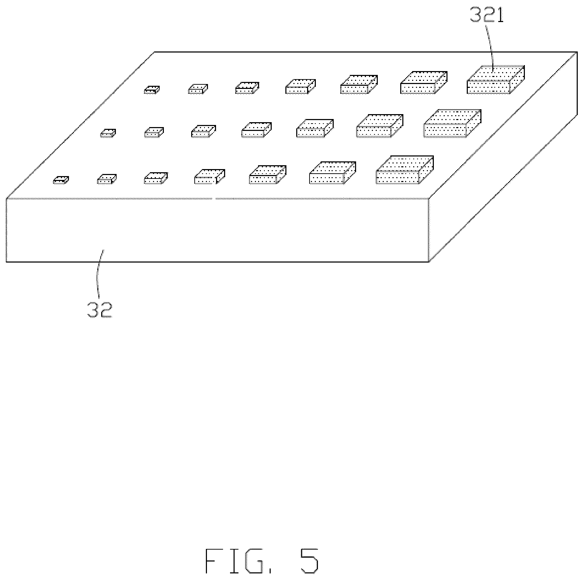

FIG. 5 shows a second embodiment of the electrode layer 32. The sizes of the electrodes 321 are increased by an equal difference according to the arrangement of the electrodes 321.

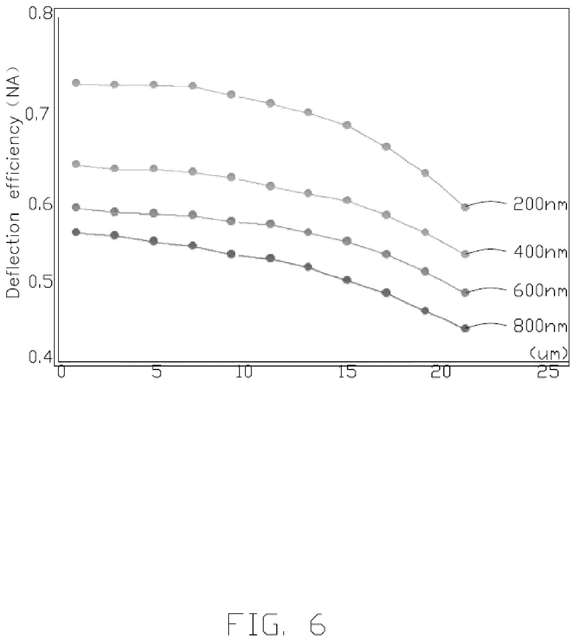

FIG. 6 shows a relationship between the deflection efficiency and the size of the electrode 321. As shown in FIG. 6, when the size of the electrode 321 becomes smaller, the deflection efficiency of the laser beam is improved in different wavelengths. Sizes of a part of the electrode 321 on the electrode layer 32 is smaller for increasing the deflection efficiency of the laser beam.

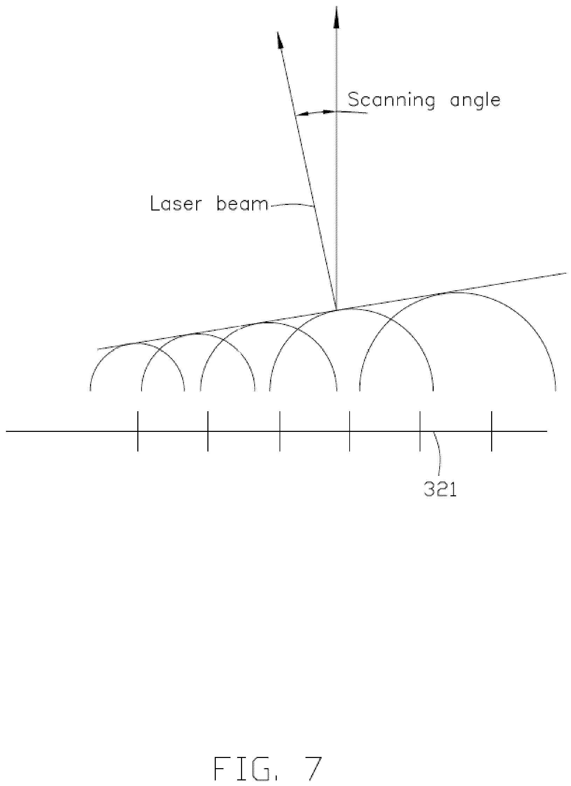

Referring to FIGS. 1 and 7, when the illuminating direction of the laser beam is adjusted to face a to-be-scanned position under the scanning angle, the processing module 40 adjusts the voltage provided to the optical phase-controlled array 30, and the distribution of the electric field is changed by the electrodes 321 of the electrode layer 32 for adjusting the carrier concentration of the dielectric layer 33. Thus, the phase delay of the laser beam entered into the conducting layer 34 is generated, which cause the phase of the laser beam to be changed. The illuminating direction of the laser beam is deflected to the corresponding scanning angle, and the laser beam is reflected to the target object by the optical phase-controlled array 30. The laser beam is further reflected by the target object 2.

The receiving module 50 includes a receiving component 51 and a conversion component 52. The receiving component 51 receives the laser beam reflected by the target object 2, and transmits the laser beam to the conversion component 52. The conversion component 52 is electrically connected with the processing module 40. The conversion component 52 coverts the received laser beam from the receiving component 51 into electrical signals, and transmits the electrical signals to the processing module 40.

The processing module 40 further receives the electrical signals from the conversion component 52, and calculates a distance between the laser radar device 1 and the target object 2. The processing module 40 calculates the distance L between the laser radar device 1 and the target object 2 according to the following formular.

$$L = T/2 \times S$$

L represents the distance between the laser radar device 1 and the target object 2. T represents a photon flight time. S represents a speed of light. The photon flight time is a time duration taken by the laser beam emitted from the optical phase-controlled array 30 to reach the target object 2 and being received by the receiving component 51.

In some embodiments, by adjusting the arrangement of the electrodes 132 and the value of the voltage provided to the optical phase-controlled array 30, the carrier concentration of the dielectric layer 33, the reflective index of the conducting layer 34, the phase of the laser beam is adjusted. The illuminating direction of the laser beam is deflected to be faced to the target object 2 accurately. Therefore, the distance between the laser radar device 1 and the target object 2 is accurately calculate according to the photon flight time of the laser beam.

Based on the structure of the laser radar device 1, the laser beam is deflected by the optical phase-controlled array 30 to be illuminated on the target object 2. The electrodes 321 on the electrode layer 32 controls the distribution of the electric field when the optical phase-controlled array 30 being powered, which cause the carrier concentration generated by the dielectric layer 33 and the reflective index of the conducting layer 34 to be changed. The phase of the laser beam entered into the conducting layer 34 is changed, and the illuminating direction of the laser beam is deflected. Due to a smaller size of the electrode 132, the deflection efficiency of the laser beam is improved, an accuracy of the laser beam being illuminated at the target object 2 is increased, and an accuracy of calculating the distance between the laser radar device 1 and the target object 2 is also improved.

## Claims

1. A laser radar device (1), characterized in that, the laser radar device comprising:

    a light source module (10), configured to emit laser beam;
    a collimating module (20), configured to collimate the laser beam;
    an optical phase-controlled array (30), configured to deflect the collimated laser beam and reflect the deflected laser beam for making the reflected laser beam to illuminate at a target object (2);
    a receiving module (50), configured to receive the laser beam reflected by the target object (2) and convert the received laser beam into electric signals; and
    a processing module (40), configured to receive the electric signals and calculate a distance between the laser radar device (1) and the target object (2) based on the electrical signals;
    wherein the optical phase-controlled array (30) comprises a conducting layer (34), a dielectric layer (33), and an electrode layer (32); when the conducting layer (34) and the electrode layer (32) being powered, an electric field is formed between the conducting layer (34) and the electrode layer (32); the dielectric layer (33) is located between the conducting layer (34) and the electrode layer (32); the dielectric layer (33) generates carrier based on the electric field formed between the conducting layer (34) and the electrode layer (32) and adjusts a carrier concentration according to a voltage of the electrical field;

wherein the electrode layer (32) comprises a plurality of electrodes (321) located on a surface of the electrode layer (32) facing to the dielectric layer (33); a surface of the dielectric layer (33) facing to the electrode layer (32) defines receiving slots corresponding to the electrodes (321); a size of at least one of the electrodes (321) is different from the size of the other electrodes (321).

2. The laser radar device (1) of claim 1, wherein the conducting layer (34) receives the collimated laser beam and reflects the laser beam;.

3. The laser radar device (1) of claim 1, wherein when the carrier concentration changes, a reflective index of the conducting layer (34) is changed.

4. The laser radar device (1) of claim 1, wherein the receiving module (50) comprises a receiving component (51) and a conversion component (52); the receiving component (51) receives the laser beam reflected by the target object (2) and transmits the laser beam to the conversion component (52); the conversion component (52) coverts the received laser beam from the receiving component (51) into electrical signals and transmits the electrical signals to the processing module (40).

5. The laser radar device (1) of claim 1, wherein the optical phase-controlled array (30) further comprises a base (31); the conducting layer (34), the dielectric layer (33), the electrode layer (32), and the base (31) are arranged in that order.

6. The laser radar device (1) of claim 1, wherein the sizes of the electrodes (321) are different from each other and the electrodes (321) are arranged according to the sizes of the electrodes (321).

7. The laser radar device (1) of claim 6 wherein the sizes of the electrodes (321) are increased by an equal difference according to the arrangement of the electrodes (321).

**Patentansprüche**

1. Eine Laserradarvorrichtung (1), **dadurch gekennzeichnet, dass** die Laserradarvorrichtung umfasst:

ein Lichtquellenmodul (10), das dazu konfiguriert ist, einen Laserstrahl zu emittieren;
ein Kollimationsmodul (20), das dazu konfiguriert ist, den Laserstrahl zu kollimieren;
ein optisches phasengesteuertes Array (30), das dazu konfiguriert ist, den kollimierten Laserstrahl abzulenken und den abgelenkten Laserstrahl zu reflektieren, um zu bewirken, dass der reflektierte Laserstrahl ein Zielobjekt (2) beleuchtet;

ein Empfangsmodul (50), das dazu konfiguriert ist, den vom Zielobjekt (2) reflektierten Laserstrahl zu empfangen und den empfangenen Laserstrahl in elektrische Signale umzuwandeln; und

ein Verarbeitungsmodul (40), das dazu konfiguriert ist, die elektrischen Signale zu empfangen und basierend auf den elektrischen Signalen eine Entfernung zwischen der Laserradarvorrichtung (1) und dem Zielobjekt (2) zu berechnen;

wobei das optische phasengesteuerte Array (30) eine leitende Schicht (34), eine dielektrische Schicht (33) und eine Elektrodenschicht (32) umfasst; wenn die leitende Schicht (34) und die Elektrodenschicht (32) mit Strom versorgt werden, ein elektrisches Feld zwischen der leitenden Schicht (34) und der Elektrodenschicht (32) gebildet wird; die dielektrische Schicht (33) sich zwischen der leitenden Schicht (34) und der Elektrodenschicht (32) befindet; die dielektrische Schicht (33) Ladungsträger basierend auf dem elektrischen Feld erzeugt, das zwischen der leitenden Schicht (34) und der Elektrodenschicht (32) gebildet wird, und eine Ladungsträgerkonzentration gemäß einer Spannung des elektrischen Feldes anpasst;

wobei die Elektrodenschicht (32) eine Vielzahl von Elektroden (321) umfasst, die auf einer Oberfläche der Elektrodenschicht (32), die der dielektrischen Schicht (33) zugewandt ist, angeordnet sind; eine Oberfläche der dielektrischen Schicht (33), die der Elektrodenschicht (32) zugewandt ist, Aufnahmeschlitze definiert, die den Elektroden (321) entsprechen; eine Größe von mindestens einer der Elektroden (321) sich von der Größe der anderen Elektroden (321) unterscheidet.

2. Die Laserradarvorrichtung (1) nach Anspruch 1, wobei die leitende Schicht (34) den kollimierten Laserstrahl empfängt und den Laserstrahl reflektiert.

3. Die Laserradarvorrichtung (1) nach Anspruch 1, wobei, wenn sich die Ladungsträgerkonzentration ändert, ein Reflexionsindex der leitenden Schicht (34) geändert wird.

4. Die Laserradarvorrichtung (1) nach Anspruch 1, wobei das Empfangsmodul (50) eine Empfangskomponente (51) und eine Umwandlungskomponente (52) umfasst; die Empfangskomponente (51) den vom Zielobjekt (2) reflektierten Laserstrahl empfängt und den Laserstrahl an die Umwandlungskomponente (52) überträgt; die Umwandlungskomponente (52) den von der Empfangskomponente (51) empfangenen Laserstrahl in elektrische Signale umwandelt und die elektrischen Signale an das Verarbeitungsmodul (40) überträgt.

**5.** Die Laserradarvorrichtung (1) nach Anspruch 1, wobei das optische phasengesteuerte Array (30) ferner eine Basis (31) umfasst; die leitende Schicht (34), die dielektrische Schicht (33), die Elektrodenschicht (32) und die Basis (31) in dieser Reihenfolge angeordnet sind.

**6.** Die Laserradarvorrichtung (1) nach Anspruch 1, wobei die Größen der Elektroden (321) voneinander verschieden sind und die Elektroden (321) gemäß den Größen der Elektroden (321) angeordnet sind.

**7.** Die Laserradarvorrichtung (1) nach Anspruch 6, wobei die Größen der Elektroden (321) gemäß der Anordnung der Elektroden (321) um eine gleiche Differenz vergrößert sind.

**Revendications**

**1.** Un dispositif radar laser (1), **caractérisé en ce que** le dispositif radar laser comprend:

un module de source lumineuse (10), configuré pour émettre un faisceau laser;
un module de collimation (20), configuré pour collimater le faisceau laser;
un réseau à commande de phase optique (30), configuré pour dévier le faisceau laser collimaté et réfléchir le faisceau laser dévié pour amener le faisceau laser réfléchi à illuminer un objet cible (2);
un module de réception (50), configuré pour recevoir le faisceau laser réfléchi par l'objet cible (2) et convertir le faisceau laser reçu en signaux électriques; et
un module de traitement (40), configuré pour recevoir les signaux électriques et calculer une distance entre le dispositif radar laser (1) et l'objet cible (2) sur la base des signaux électriques;
dans lequel le réseau à commande de phase optique (30) comprend une couche conductrice (34), une couche diélectrique (33) et une couche d'électrode (32); lorsque la couche conductrice (34) et la couche d'électrode (32) sont alimentées, un champ électrique est formé entre la couche conductrice (34) et la couche d'électrode (32); la couche diélectrique (33) est située entre la couche conductrice (34) et la couche d'électrode (32); la couche diélectrique (33) génère des porteurs sur la base du champ électrique formé entre la couche conductrice (34) et la couche d'électrode (32) et ajuste une concentration de porteurs selon une tension du champ électrique;
dans lequel la couche d'électrode (32) comprend une pluralité d'électrodes (321) situées sur une surface de la couche d'électrode (32) faisant face à la couche diélectrique (33); une surface de la couche diélectrique (33) faisant face à la couche d'électrode (32) définit des logements de réception correspondant aux électrodes (321); une taille d'au moins l'une des électrodes (321) est différente de la taille des autres électrodes (321).

**2.** Le dispositif radar laser (1) selon la revendication 1, dans lequel la couche conductrice (34) reçoit le faisceau laser collimaté et réfléchit le faisceau laser.

**3.** Le dispositif radar laser (1) selon la revendication 1, dans lequel, lorsque la concentration de porteurs change, un indice de réflexion de la couche conductrice (34) est modifié.

**4.** Le dispositif radar laser (1) selon la revendication 1, dans lequel le module de réception (50) comprend un composant de réception (51) et un composant de conversion (52); le composant de réception (51) reçoit le faisceau laser réfléchi par l'objet cible (2) et transmet le faisceau laser au composant de conversion (52); le composant de conversion (52) convertit le faisceau laser reçu du composant de réception (51) en signaux électriques et transmet les signaux électriques au module de traitement (40).

**5.** Le dispositif radar laser (1) selon la revendication 1, dans lequel le réseau à commande de phase optique (30) comprend en outre une base (31); la couche conductrice (34), la couche diélectrique (33), la couche d'électrode (32) et la base (31) sont agencées dans cet ordre.

**6.** Le dispositif radar laser (1) selon la revendication 1, dans lequel les tailles des électrodes (321) sont différentes les unes des autres et les électrodes (321) sont agencées selon les tailles des électrodes (321).

**7.** Le dispositif radar laser (1) selon la revendication 6, dans lequel les tailles des électrodes (321) augmentent d'une différence égale selon l'agencement des électrodes (321).

FIG. 1

30

FIG. 2

30

34

33

32

31

FIG. 3

FIG. 4

FIG. 5

FIG. 6

Scanning angle

Laser beam

321

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107703517
- US 2021072532 A1
- US 2020303888 A1